# NEUE EUROPÄISCHE PATENTSCHRIFT

(11) **EP 1 186 929 B2**
(45) Veröffentlichungstag und Bekanntmachung des Hinweises auf die Entscheidung über den Einspruch: **30.09.2009**
(45) Hinweis auf die Patenterteilung: 14.12.2005
(21) Anmeldenummer: 01114039.9
(22) Anmeldetag: 08.06.2001
(51) Int. Cl.: G02B 21/00

(54) **Anordnung zum Untersuchen mikroskopischer Präparate mit einem Scanmikroskop**
System for investigating microscopic samples using a scanning microscope
Système pour l'examen des préparations microscopiques avec un microscope de balayage

(30) Priorität: 29.03.2001 DE 10115487; 17.06.2000 DE 10030013
(43) Veröffentlichungstag der Anmeldung: 13.03.2002
(73) Patentinhaber: Leica Microsystems CMS GmbH, 35578 Wetzlar (DE)
(72) Erfinder: Birk, Holger, Dr., 74909 Meckesheim (DE); Storz, Rafael, Dr., 69245 Bammental (DE); Engelhardt, Johann, Dr., 76669 Bad Schönborn (DE)
(74) Vertreter: Schaumburg, Thoenes, Thurn, Landskron, Eckert

(56) Entgegenhaltungen:
- DE-A- 19 622 359
- DE-A- 19 702 753
- DE-A- 19 702 753
- DE-P- 10 030 013
- DE-P- 10 115 487
- US-A- 5 161 053
- US-A- 5 161 053
- RANKA J K ET AL: "VISIBLE CONTINUUM GENERATION IN AIR-SILICA MICROSTRUCTURE OPTICAL FIBERS WITH ANOMALOUS DISPERSION AT 800 NM" OPTICS LETTERS, OPTICAL SOCIETY OF AMERICA, WASHINGTON, US, Bd. 25, Nr. 1, 1. Januar 2000 (2000-01-01), Seiten 25-27, XP000928530 ISSN: 0146-9592
- KEN-ICHI UEDA: 'Advanced Laser Source for Multiphoton Microscope' REV. OF LASER ENG. Bd. 27, Nr. 12, 12 Dezember 1999,
- M.J. GANDER ET AL OPT. LETT. Bd. 36, Nr. 1, 01 August 1999, Seiten 1017 - 1019
- W.J. WADSWORTH ET AL ELECTRON.LETT. Bd. 36, Nr. 1, 06 Januar 2000, Seiten 53 - 55
- J.C. KNIGHT ET AL SCIENCE Bd. 282, 20 November 1998, Seiten 1476 - 1478
- T.A. BIRKS ET AL OPT. LETT. Bd. 22, Nr. 13, 01 Juli 1997, Seiten 961 - 983
- C.E. MORTIMER CHEMIE 1983, GEORG THIEME VERLAG, Seite 20
- J.K. RANKA ET AL OPT.LETT. Bd. 25, Nr. 1, 01 Januar 2000, Seiten 25 - 27

## Beschreibung

Die Erfindung betrifft eine Anordnung zum Untersuchen mikroskopischer Präparate mit einem Scanmikroskop. Im besonderen betrifft die Erfindung eine Anordnung zum Untersuchen mikroskopischer Präparate mit einem Scanmikroskop, das einen Laser und ein optisches Mittel umfasst, das das von dem Laser erzeugte Licht auf eine zu untersuchende Probe fokussiert. Das Scanmikroskop kann auch als konfokales Mikroskop ausgestaltet sein.

In der Scanmikroskopie wird eine Probe mit einem Lichtstrahl abgerastert. Hierzu werden oft Laser als Lichtquelle eingesetzt. Aus der EP 0 495 930: "Konfokales Mikroskopsystem für Mehrfarbenfluoreszenz" ist beispielsweise ein Anordnung mit einem einzelnen mehrere Laserlinien emittierenden Laser bekannt. Derzeit werden hierfür meist Mischgaslaser, insbesondere ArKr-Laser, eingesetzt.

Ebenso ist es denkbar Diodenlaser und Festkörperlaser zu verwenden.

Aus der Patenschrift US-A-5,161,053 mit dem Titel, "Confocal Microscope", ist ein konfokales Mikroskop bekannt, bei dem Licht einer externen Lichtquelle mit Hilfe einer Glasfaser zum Strahlengang des Mikroskops transportiert wird und das Ende der Glasfaser als Punktlichtquelle dient, so dass eine mechanische Blende überflüssig wird.

Die Verwendung von ultraviolettem Licht in der Scanmikroskopie ist beispielsweise aus der europäischen Patentschrift EP 0 592 089 "Scanning confocal microscope providing a continuous display" bekannt. Leider führt eine Einkopplung des UV-Lichtes mit Hilfe einer Lichtleitfaser meist nach wenigen Stunden zu irreversiblen Schäden an der Lichtleitfaser. Es kommt unter anderem zur Ausbildung von Farbzentren, die die Transmissivität der Lichtleitfaser stark herabsetzen.

Eine Vorrichtung zur Verlängerung der Lebensdauer der Lichtleitfaser ist in der deutschen Patentschrift DE 44 46 185 "Vorrichtung zum Einkoppeln eines UV-Laserstrahles in ein konfokales Laser-Scanmikroskop" veröffentlicht. Dort wird ein Strahlunterbrecher eingesetzt, der den UV-Lichtstrahl nur dann freigibt, wenn der UV-Lichtstrahl für die Bildaufnahme tatsächlich benötigt wird. Mit dieser Vorrichtung wird das Problem der Beschädigung der Lichtleitfaser verringert, jedoch nicht grundlegend gelöst.

Der Erfindung liegt die Aufgabe zugrunde ein Scanmikroskop zu schaffen, das die aufgezeigten Probleme löst.

Die objektive Aufgabe wird durch eine Anordnung gelöst, die die Merkmale des kennzeichnenden Teils des Patentanspruchs 1 beinhaltet.

Das Lichtleitelement weist vorzugsweise mikrooptische Strukturelemente in Form von Kanülen, Stegen, Waben, Röhren oder Hohlräume auf. Durch einen solchen optisch nichtlinearen Aufbau wird UV-Licht geleitet, ohne das Lichtleitelement oder dessen Struktur zu schädigen.

Eine gute Handhabbarkeit ist durch die Ausbildung des Lichtleitelements als Lichtleitfaser gegeben.

In einer bevorzugten Ausgestaltung beinhaltet das Lichtleitelement einen ersten und einen zweiten Bereich, wobei der erste Bereich eine homogene Struktur aufweist und in dem zweiten Bereich eine mikroskopische Struktur aus mikrooptischen Strukturelementen gebildet ist. Besonders vorteilhaft ist diese Ausgestaltungsform, wenn der erste Bereich den zweiten Bereich umschließt.

Das Lichtleitelement in der Form eines "photonic band gap material" hat den Vorteil, dass durch den optisch nichtlinearen Aufbau der Faser UV-Licht geleitet wird, ohne die Faser oder deren Struktur zu schädigen. Bei "Photonic band gap material" handelt es sich um mikrostrukturiertes durchsichtiges Material. Meist durch Zusammenfügen von verschiedenen Dielektrika lässt sich dem resultierenden Kristall eine Bandstruktur für Photonen aufprägen, die an die elektronische Bandstruktur von Halbleitern erinnert.

Die Technik wird neuerdings auch bei Lichtleitfasern verwirklicht. Die Fasern werden durch Ausziehen von strukturiert angeordneten Glasröhren oder Glasblöcken hergestellt, so dass eine Struktur entsteht, die nebeneinanderliegend Glas-, bzw. Kunststoffmaterial und Hohlräume aufweist. Den Fasern liegt eine besondere Struktur zugrunde: In Faserrichtung sind kleine Kanülen frei gelassen, die einen Abstand von etwa 2-3 µm und einen Durchmesser von ca. 1-2µm haben und meist mit Luft gefüllt sind, wobei Kanülendurchmesser von 1,9 µm besonders geeignet sind. In der Mitte der Faser liegt meist keine Kanüle vor. Diese Art von Fasern sind auch als "photon crystal fibres", "holey fibers" oder microstructured fibers" bekannt. Es sind auch Ausgestaltungen als sog. "Hollow fiber" bekannt, bei denen sich in der Mitte der Faser eine in der Regel luftgefüllte Röhre befindet, um die herum Kanülen angeordnet sind. Fasern dieser Art sind für den Transport von UV-Licht besonders prädestiniert, da das Licht nicht im optisch dichten Fasermaterial, sondern in den Hohlräumen geführt wird.

Zum Einsatz in der Mikroskopie ist es wichtig Mittel zur Lichtleistungsstabilisierung zu implementieren. Daher lässt sich in vorteilhafter Weise eine solches optisches Lichtleitelement mit akusto- oder elektrooptischen, einstellbaren Filtern (AOTF), mit akusto- oder elektrooptischen Deflektoren (AOD), akusto- oder elektrooptischen Strahlteilern (AOBS) kombinieren. Diese können zum einen zur Wellenlängenauswahl, als auch zur Ausblendung des Detektionslichtes verwendet werden (unsere deutsche Anmeldung DE 199 06 757 A1: "Optische Anordnung").

Insbesondere in der konfokalen Mikroskopie lässt sich das Austrittsende der Lichtleitfaser als Punktlichtquelle nutzen, wodurch die Verwendung einer Anregungsblende überflüssig wird.

Im weiteren Ausführungsformen sind Vorrichtungen zur Kompensation von Lichtleistungsschwankungen vorgesehen sein. Beispielsweise kann eine Regelschleife zur Lichtleistungsstabilisierung eingebaut werden, die parasitär die Lichtleistung im Strahlengang des Mikroskops misst und beispielsweise durch Variation der Pumplichtleistung oder mit Hilfe eines akusto- oder elektrooptischen Elements die Probenbeleuchtungslichtleistung konstant hält. Zu diesem Zweck könnten auch LCD-Abschwächer verwendet werden.

Ein weitere Vorteil der Erfindung ist, das Lichtleitelement so auszugestalten, dass sowohl UV-Licht, als auch Licht anderer Wellenlängen weitgehend verlust- und schädigungsfrei zum Scanmikroskop transportiert werden kann, insbesondere wenn die Beleuchtungseinrichtung bereits entsprechend gestaltet ist, dass sie mehrere spektrale Bereiche zur Beleuchtung liefert. Der Laser, der die Beleuchtungseinrichtung für ein Scanmikroskop darstellt, hat an der Lichtaustrittsöffnung ein optisches Bauelement befestigt. Das optische Bauelement besteht aus Photonic-Band-Gap-Material. Ferner kann das Photonic-Band-Gap-Material als Lichtleitfaser ausgestaltet sein.

In der Zeichnung ist der Erfindungsgegenstand schematisch dargestellt und wird anhand der Figuren nachfolgend beschrieben. Dabei zeigen:
- Fig. 1: eine erfindungsgemäße Anordnung mit einem Konfokalmikroskop,
- Fig. 2: eine Anordnung mit einem Regelkreis zur Lichtleitungsstabilisierung,
- Fig. 3: eine schematische Darstellung eines optischen Lichtleitelements,
- Fig. 4: eine weitere schematische Darstellung eines optischen Lichtleitelements und
- Fig. 5: eine weitere schematische Darstellung eines optischen Lichtleitelements

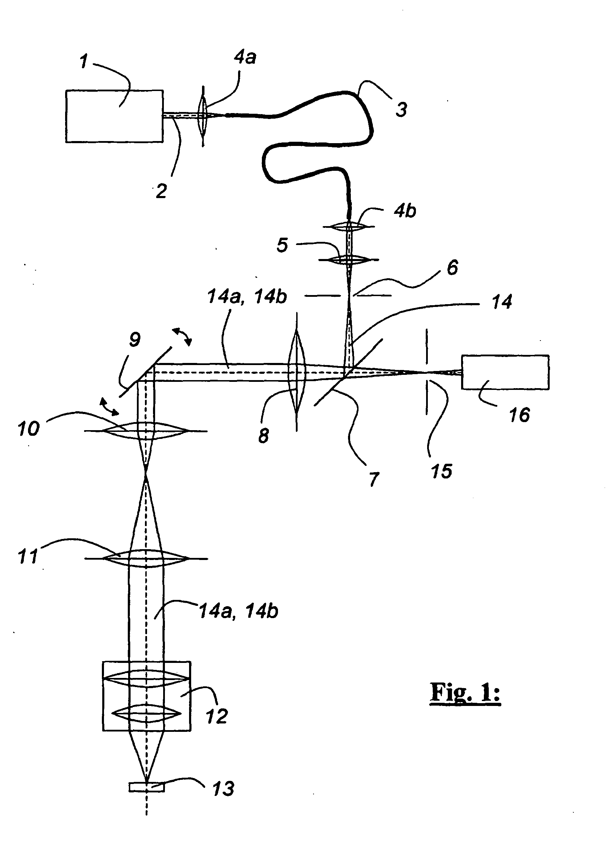

Fig. 1 zeigt ein Konfokalmikroskop, das ein optisches Lichtleitelement 3, das als Lichtleitfaser mit zum Transport des von einem Laser 1, der als Mischgaslaser ausgebildet ist, erzeugten Lichts verwendet. Der Laser 1 definiert einen Laserstrahl 2, der durch das optische Lichtleitelement 3 geleitet wird. Das optische Lichtleitelement 3 ist als Lichtleitfaser ausgeführt und besteht aus Photonic-Band-Gap-Material. Dem optischen Lichtleitelement 3 ist eine Einkoppeloptik 4a vor- und eine Auskoppeloptik 4b nachgeordnet. Aus dem optischen Lichtleitelement 3 tritt ein Beleuchtungslichtstrahl 14 aus, der von einer ersten Optik 5 auf ein Beleuchtungspinhole 6 abgebildet wird und dann auf einen Strahlteiler 7 trifft. Vom Strahlteiler 7 gelangt der Beleuchtungslichtstrahl 14 zu einer zweiten Optik 8, die einen parallelen Lichtstrahl 14a erzeugt, der auf einen Scanspiegel 9 trifft. Dem Scanspiegel 9 sind mehrere Optiken 10 und 11 nachgeschaltet, die den Lichtstrahl 14a formen. Der Lichtstrahl 14a gelangt zu einem Objektiv 12, von dem er auf eine Probe 13 fokussiert wird. Das von der Probe reflektierte oder ausgesendete Licht definiert einen Beobachtungsstrahlengang 14b. Das Licht des Beobachtungsstrahlengang 14b tritt abermals durch die zweite Optik 8 und wird auf ein Detektionspinhole 15 abgebildet, das vor einem Detektor 16 sitzt. Durch das optische Lichtleitelement 3 ist es möglich, das für die Untersuchung der Probe 13 notwendige Laserlicht, das auch UV-Anteile enthält, schädigungsfrei zu transportieren.

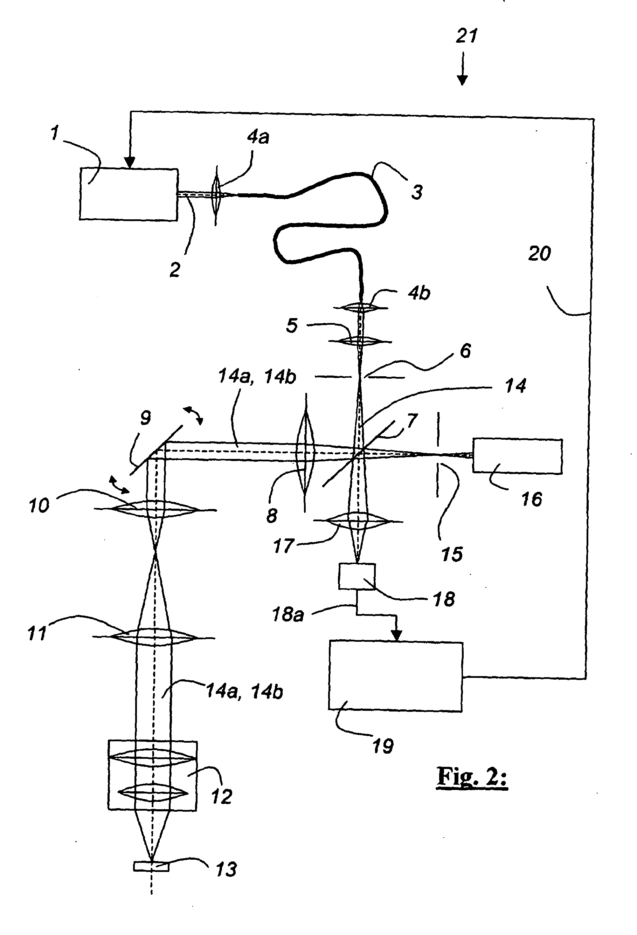

Das in Fig. 2 dargestellte Ausführungsbeispiel entspricht in weiten Zügen der in Fig. 1 beschriebenen Ausführungsform. Zusätzlich ist ein Regelkreis 21 zur Lichtleistungsstabilisierung vorgesehen. Der durch den Strahlteiler 7 hindurch tretende kleine Anteil des Beleuchtungslichtstrahls 14 wird mit Hilfe der Optik 17 auf eine Photodiode 18 fokussiert, die ein zur Leistung des auftreffenden Lichtes proportionales elektrisches Signal erzeugt. Dieses Signal wird über die Leitung 18a an die Steuereinheit 19 weitergeleitet, die ein Regelsignal errechnet, das über die Leitung 20 an den Fernsteuereingang des Lasers 1 geleitet wird. Die Steuereinheit ist so ausgelegt, dass die Lichtleistung des Beleuchtungslichtstrahles 14 nach dem Austreten aus dem optischen Lichtleitelement 3 weitgehend konstant ist, so dass auch Transmissionsschwankungen ausgeglichen sind.

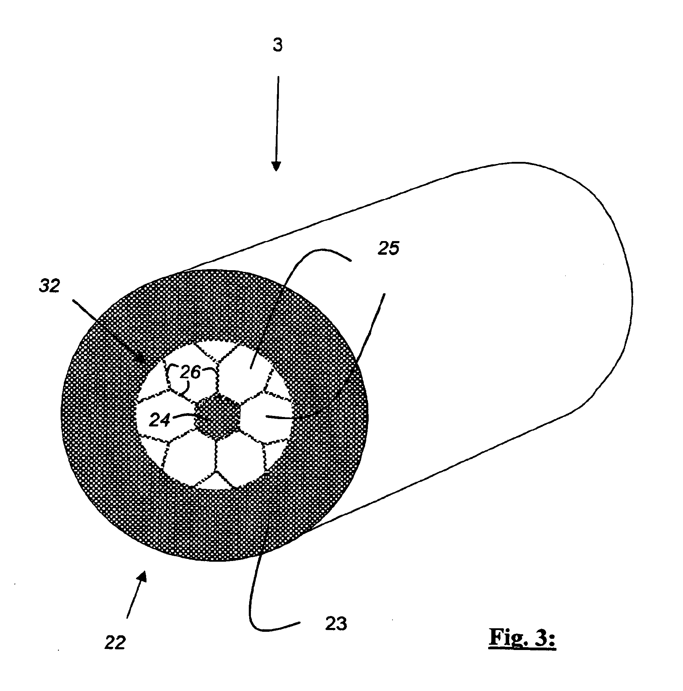

Fig. 3 zeigt eine Ausführungsform des optischen Lichtleitelements 3, das eine besondere wabenförmige Mikrostruktur 22 aufweist. Die gezeigte Wabenstruktur ist sowohl für den Transport von UV- als auch von sichtbarem Licht besonders geeignet. Der Durchmesser der Glasinnenkanüle 24 beträgt ca. 1,9 µm. Die innere Kanüle 24 ist von Glasstegen 26 umgeben. Die Glasstege 26 formen wabenförmige Hohlräume 25. Diese mikrooptischen Strukturelemente bilden gemeinsam einen zweiten Bereich 32, der von einem ersten Bereich 23, der als Glasmantel ausgeführt ist, umgeben ist.

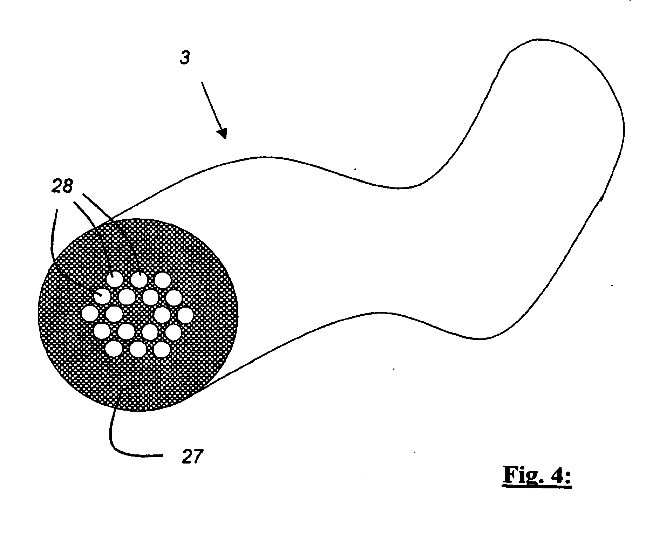

Fig. 4 zeigt eine Ausführungsform des optischen Lichtleitelements 3, das als biegsame Faser ausgestaltet ist und aus einem Glaskörper 27 besteht, der mehrere hohle Kanülen 28 beinhaltet. Im Zentrum befindet sich bei dieser Ausgestaltungsform keine hohle Kanüle.

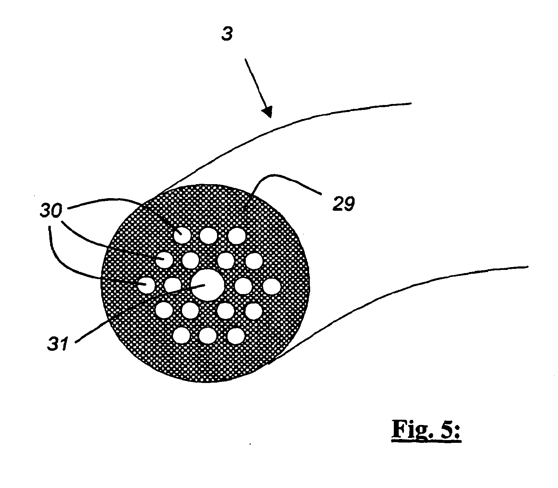

Fig. 5 zeigt eine weitere Ausgestaltungsform des optischen Lichtleitelements, das aus einem Kunststoff- oder einem Glaskörper 29 besteht, in dem sich hohle Kanülen 30 mit einem Innendurchmesser von typischerweise 1,9 µm befinden. Im Zentrum des optischen Lichtleitelements 3 befindet sich eine hohle Kanüle 31, die einen Innendurchmesser von typischerweise 3 µm aufweist.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Laser
- 2: Laserstrahl
- 3: optisches Lichtleitelement
- 4a: Einkoppeloptik
- 4b: Auskoppeloptik
- 5: Optik
- 6: Beleuchtungspinhole
- 7: Strahlteiler
- 8: Optik
- 9: Scanspiegel
- 10: Optik
- 11: Optik
- 12: Objektiv
- 13: Probe
- 14: Beleuchtungslichtstrahl
- 14a: Lichtstrahl
- 14b: Beobachtungsstrahlengang
- 15: Detektionspinhole
- 16: Detektor
- 17: Optik
- 18: Photodiode
- 18a: Leitung
- 19: Steuereinheit
- 20: Leitung
- 21: Regelkreis
- 22: Mikrostruktur
- 23: erster Bereich
- 24: innere Kanüle
- 25: Hohlräume
- 26: Glasstege
- 27: Glaskörper
- 28: Kanülen
- 29: Kunststoffkörper
- 30: hohle Kanülen
- 31: hohle Kanüle
- 32: zweiter Bereich

## Patentansprüche

1. Anordnung zum Untersuchen mikroskopischer Präparate mit einem Scanmikroskop, das einen Laser (1) und ein Objektiv (12) umfasst, das das von dem Laser (1) erzeugte Licht auf eine zu untersuchende Probe (13) fokussiert, wobei zwischen dem Laser (1) und dem Objektiv (12) ein Lichtleitelement (3) vorgesehen ist, das das vom Laser (1) erzeugte Licht transportiert, wobei der Laser (1) UV-Licht emittiert, **dadurch gekennzeichnet, dass** das Lichtleitelement aus einer Vielzahl von mikrooptischen Strukturelementen aufgebaut ist, die zumindest zwei unterschiedliche optische Dichten aufweisen.

2. Anordnung nach Anspruch 1, **dadurch gekennzeichnet, dass** das Lichtleitelement (3) einen ersten Bereich und einen zweiten Bereich beinhaltet, wobei der erste Bereich eine homogene Struktur aufweist und in dem zweiten Bereich eine mikroskopische Struktur aus mikrooptischen Strukturelementen gebildet ist.

3. Anordnung nach Anspruch 1, **dadurch gekennzeichnet, dass** das Lichtleitelement (3) aus nebeneinander angeordnetem Glas- oder Kunststoffmaterial und Hohlräumen (25) besteht.

4. Anordnung nach Anspruch 1, **dadurch gekennzeichnet, dass** die mikrooptischen Strukturelemente Kanülen (24, 28), Stege (26), Waben, Röhren oder Hohlräume (25) sind.

5. Anordnung nach Anspruch 1, **dadurch gekennzeichnet, dass** das Lichtleitelement (3) aus Photonic-Band-Gap-Material besteht.

6. Anordnung nach einem der Ansprüche 1 bis 5, **dadurch gekennzeichnet, dass** das Lichtleitelement als Lichtleitfaser ausgestaltet ist.

7. Anordnung nach einem der Ansprüche 1 bis 6, **dadurch gekennzeichnet, dass** Mittel zur Lichtleistungsstabilisierung vorgesehen sind.

8. Anordnung nach Anspruch 7, **dadurch gekennzeichnet, dass** zur Lichtleistungsstabilisierung ein Regelkreis (21) vorgesehen ist.

9. Anordnung nach einem der vorherigen Ansprüche, **dadurch gekennzeichnet, dass** das Scanmikroskop ein Konfokalmikroskop ist.

## Claims

1. Arrangement for studying microscopic preparations with a scanning microscope, which comprises a laser (1) and an objective (12), which focuses the light produced by the laser (1) onto a sample (13) to be studied, an optical waveguide element (3), which transports the light produced by the laser (1), being provided between the laser (1) and the objective (12), wherein the laser (1) emits UV light, **characterized in that** the optical waveguide element is constructed from a plurality of micro-optical structure elements which have at least two different optical densities.

2. Arrangement according to Claim 1, **characterized in that** the optical waveguide element (3) contains a first region and a second region, the first region having a homogeneous structure, and a microscopic structure comprising micro-optical structure elements being formed in the second region.

3. Arrangement according to Claim 1, **characterized in that** the optical waveguide element (3) consists of adjacent glass or plastic material and cavities (25).

4. Arrangement according to Claim 1, **characterized in that** the micro-optical structure elements are cannulas (24, 28), webs (26), honeycombs, tubes or cavities (25).

5. Arrangement according to Claim 1, **characterized in that** the optical waveguide element (3) consists of photonic band gap material.

6. Arrangement according to one of Claims 1 to 5, **characterized in that** the optical waveguide element is configured as an optical fibre.

7. Arrangement according to one of Claims 1 to 6, **characterized in that** means for light-power stabilization are provided.

8. Arrangement according to Claim 7, **characterized in that** a control loop (21) is provided for light-power stabilization.

9. Arrangement according to one of the preceding claims, **characterized in that** the scanning microscope is a confocal microscope.

## Revendications

1. Système pour l'examen de préparations microscopiques avec un microscope à balayage, comprenant un laser (1) et un objectif (12) qui focalise la lumière produite par le laser (1) sur un échantillon (13) à examiner, un élément de guidage de lumière (3) étant prévu entre le laser (1) et l'objectif (12), l'élément transportant la lumière produite par le laser (1), le laser (1) émettant de la lumière UV, **caractérisé en ce que** l'élément de guidage de lumière se compose d'une pluralité d'éléments structurels microoptiques qui présentent au moins deux densités optiques différentes.

2. Système selon la revendication 1, **caractérisé en ce que** l'élément de guidage de lumière (3) comprend une première zone et une deuxième zone, dans lequel la première zone présente une structure homogène et une structure microscopique composée d'éléments structurels microoptiques est formée dans la deuxième zone.

3. Système selon la revendication 1, **caractérisé en ce que** l'élément de guidage de lumière (3) se compose d'un matériau de verre ou synthétique et de cavités (25), disposés côte à côte.

4. Système selon la revendication 1, **caractérisé en ce que** les éléments structurels microoptiques sont des canules (24, 28), des nervures (26), des alvéoles, des tubes ou des cavités (25).

5. Système selon la revendication 1, **caractérisé en ce que** l'élément de guidage de lumière (3) se compose de cristal photonique.

6. Système selon l'une quelconque des revendications 1 à 5, **caractérisé en ce que** l'élément de guidage de lumière est configuré comme une fibre optique.

7. Système selon l'une quelconque des revendications 1 à 6, **caractérisé en ce que** des moyens de stabilisation de rendement lumineux sont prévus.

8. Système selon la revendication 7, **caractérisé en ce qu'**une boucle de régulation (21) est prévue pour la stabilisation de rendement lumineux.

9. Système selon l'une quelconque des revendications précédentes, **caractérisé en ce que** le microscope à balayage est un microscope confocal.
